(19) Europäisches Patentamt
European Patent Office
Office européen des brevets

(11) Veröffentlichungsnummer: **0 001 975**
**B1**

(12) # EUROPÄISCHE PATENTSCHRIFT

(45) Veröffentlichungstag der Patentschrift: **15.04.81**

(51) Int. Cl.³: **C 07 F 9/65, A 01 N 57/16**

(21) Anmeldenummer: **78101014.5**

(22) Anmeldetag: **28.09.78**

(54) **Pyridazinon-yl-(di) (thio)-phosphor(phosphon)-säureester, Verfahren zu ihrer Herstellung, Schädlingsbekämpfungsmittel enthaltend diese Verbindungen und Verfahren zur Bekämpfung von Schädlingen.**

(30) Priorität: **14.10.77 DE 2746207**

(43) Veröffentlichungstag der Anmeldung:
**30.05.79 Patentblatt 79/11**

(45) Bekanntmachung des Hinweises auf die Patenterteilung:
**15.04.81 Patentblatt 81/15**

(84) Benannte Vertragsstaaten:
**BE CH DE FR GB LU NL SE**

(56) Entgegenhaltungen:
**DE - A - 2 343 741**
**DE - A - 2 531 340**
**DE - A - 2 534 893**
**US - A - 3 310 560**

(73) Patentinhaber: **BASF Aktiengesellschaft**
**Carl-Bosch-Strasse 38**
**D-6700 Ludwigshafen (DE)**

(72) Erfinder: **Baumann, Annegrit, Dr.**
**Im Sennteich 26**
**D-6800 Mannheim 24 (DE)**
Erfinder: **Adolphi, Heinrich, Dr.**
**Kalmitweg 11**
**D-6703 Limburgerhof (DE)**
Erfinder: **Huber, Rolf, Dr.**
**Rexland Drive 31**
**Boonton N.J. (US)**
Erfinder: **Kiehs, Karl, Dr.**
**Sudetenstrasse 22**
**D-6840 Lampertheim (DE)**

**EP 0 001 975 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Pyridazinon-yl-(di)(thio)-phosphor(phosphon)-säureester, Verfahren zu ihrer Herstellung, Schädlingsbekämpfungsmittel enthaltend diese Verbindungen und Verfahren zur Bekämpfung von Schädlingen

Die vorliegende Erfindung betrifft neue Pyridazinon-yl-(di)(thio)-phosphor(phosphon)-säureester, ein Verfahren zu ihrer Herstellung sowie Schädlingsbekämpfungsmittel, insbesondere insektizide und akarizide Mittel, die diese Verbindungen als Wirkstoffe enthalten.

Die erfindungsgemäßen Pyridazinon-yl-(di)(thio)-phosphor(phosphon)-säureester der Formel I

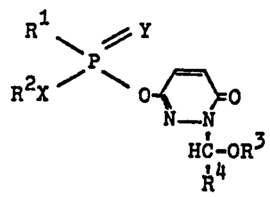

(I)

in der

X und Y für Sauerstoff oder Schwefel,

$R^1$ für unverzweigtes oder verzweigtes Alkyl mit 1 bis 4 Kohlenstoffatomen, Alkoxy mit 1 bis 4 Kohlenstoffatomen, Mono- oder Dialkylamino mit 1 bis 4 Kohlenstoffatomen je Alkylrest, Phenyl oder Benzyl,

$R^2$ für unverzweigtes oder verzweigtes Alkyl mit 1 bis 4 Kohlenstoffatomen, Phenyl oder Benzyl,

$R^3$ für unverzweigtes oder verzweigtes Alkyl mit 1 bis 4 Kohlenstoffatomen oder Phenyl,

$R^4$ für unverzweigtes oder verzweigtes Alkyl mit 1 bis 4 Kohlenstoffatomen stehen oder

$R^3$ und $R^4$ zusammen mit dem Sauerstoff- und Kohlenstoffatom, deren Substituenten sie sind, einen 5- oder 6-gliedrigen gesättigten Ring bilden, der durch Alkylreste mit 1 bis 4 Kohlenstoffatomen substituiert sein kann,

eignen sich hervorragend zur Bekämpfung von schädlichen und lästigen Gliedertieren aus der Klasse der Insekten und der Arachnoidea.

In der Formel I stehen $R^1$ vorzugsweise für unverzweigte oder verzweigte Alkyl- oder Alkoxyreste mit 1 bis 3 Kohlenstoffatomen oder Phenyl, $R^2$ und $R^3$ vorzugsweise für unverzweigte oder verzweigte Alkylreste mit 1 bis 4 Kohlenstoffatomen oder Phenyl, $R^4$ vorzugsweise für unverzweigte oder verzweigte Alkylreste mit 1 bis 3 Kohlenstoffatomen; $R^3$ und $R^4$ bilden außerdem zusammen mit den Atomen, deren Substituenten sie sind, vorzugsweise Tetrahydrofuran- oder Tetrahydropyranringe, die durch Alkyreste mit 1 bis 4 Kohlenstoffatomen, vorzugsweise durch Methyl, substituiert sein können.

Bevorzugte Verbindungen der Formel I sind solche, bei denen X und Y für Sauerstoff oder Schwefel, $R^1$ für Äthoxy, $R^2$ für Äthyl oder n-Propyl, $R^3$ für unverzweigtes oder verzweigtes Alkyl mit 1 bis 4 Kohlenstoffatomen und $R^4$ für unverzweigtes oder verzweigtes Alkyl mit 1 bis 3 Kohlenstoffatomen stehen oder $R^3$ und $R^4$ zusammen mit dem Sauerstoff- und Kohlenstoffatom, deren Substituenten sie sind, einen Tetrahydrofuran- oder Tetrahydropyranring bilden.

Gegenstand der Erfindung ist weiterhin ein Verfahren zur Herstellung der Pyridazinon-yl-(di)-(thio)-phosphor(phosphon)-säureester der Formel I, das dadurch gekennzeichnet ist, daß man Pyridazinon-yl-(di)(thio)-phosphor(phosphon)-säureester der Formel II

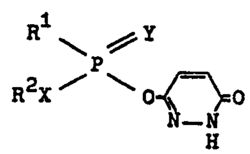

II

in der $R^1$, $R^2$, X und Y die oben angegebenen Bedeutungen haben,
mit Enoläthern der Formel III

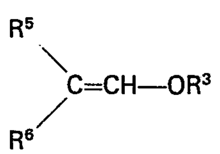

III

in der

$R^3$ die oben genannten Bedeutungen hat,

$R^5$ für Wasserstoff oder Methyl,

$R^6$ für Wasserstoff oder Alkyl mit 1 bis 3 Kohlenstoffatomen und

$R^3$ und $R^5$ zusammen eine Methylenkette mit 2 oder 3 Kohlenstoffatomen, die durch Alkylreste mit 1 bis 4 Kohlenstoffatomen substituiert sein kann, bedeuten,

in Gegenwart einer katalytischen Menge an Säure und eines inerten Lösungs- oder Verdünnungsmittels umsetzt.

Als katalytisch wirkende Säure kommen anorganische oder organische Säuren sowie Lewis-Säuren in Betracht, beispielsweise HCl, HBr, HF, $H_2SO_4$, $H_3PO_4$, $HClO_4$, $Cl_3CCOOH$,

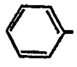 $SO_3H$, $SOCl_2$, $BF_3O(C_2H_5)_2$, $ZnCl_2$.

Geeignete Lösungs- oder Verdünnungsmittel sind beispielsweise aromatische Kohlenwasserstoffe, wie Benzol, Toluol, Xylole, Chlorbenzol, Nitrobenzol; chlorierte oder nitrierte aliphatische Kohlenwasserstoffe, wie Dichlormethan, Chloroform, Tetrachlorkohlenstoff, 1,2-Dichloräthan, Nitromethan; aliphatische Nitrile, wie Acetonitril, Propionitril; acyclische und cyclische Äther, wie Diäthyläther, Diisopropyläther, Diglykoldimethyläther, Tetrahydrofuran, Dioxan; acyclische und cyclische Ketone, wie Aceton, Methyläthylketon, Diäthylketon, Methylpropylketon, Cyclohexanon.

Die Reaktionstemperatur kann innerhalb eines größeren Bereichs variiert werden. Im allgemeinen arbeitet man zwischen 0 und 100°C, vorzugsweise zwischen 30 und 50°C, soweit nicht der Siedepunkt des Lösungsmittels die Temperatur nach oben begrenzt.

Die als Ausgangsstoffe verwendeten Pyridazinon-yl-(di)(thio)-phosphor(phosphon)-säureester der Formel II können durch die an sich bekannte Umsetzung von 3-Hydroxy-pyridazinon-(6) mit den entsprechend substituierten (Thiono)-(Thiol)-phosphor(phosphon)-säureesterchloriden der Formel

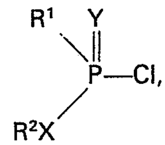

in der $R^1$, $R^2$, X und Y die oben angegebenen Bedeutungen haben, erhalten werden (J. Org. Chem. *26,* 3382—3386 (1961)).

Die Herstellung der Enoläther der Formel III ist ebenfalls bekannt (s. Houben-Weyl, Methoden der organischen Chemie, Bd. 6/3, S. 90 ff, Georg Thieme-Verlag, Stuttgart, 1965).

Zur Durchführung des Verfahrens setzt man im allgemeinen einen geringen Überschuß an Enoläther der Formel III gegenüber Ausgangsstoff der Formel II, zweckmäßigerweise einen 10%-igen Überschuß, ein. Ein größerer Überschuß bringt keine Vorteile. Im allgemeinen wird das Pyridazinonylderivat zusammen mit dem Lösungs- oder Verdünnungsmittel vorgelegt, dann werden wenige Tropfen Säure und anschließend der Enoläther zugesetzt. Nach eine- bis mehrstündiger Reaktionsdauer bei erhöhten Temperaturen kühlt man den Reaktionsansatz auf Raumtemperatur ab, stellt, beispielsweise mit einem Amin, schwach alkalisch, und arbeitet nach üblichen Methoden, z.B. Waschen, Trocknen und Destillieren, auf.

Die neuen Verbindungen fallen in Form von gelben Ölen an. Zu ihrer Charakterisierung dient der Brechungsindex sowie die Elementaranalyse.

Die folgenden Beispiele erläutern die Herstellung der erfindungsgemäßen Verbindungen:

## Beispiel 1

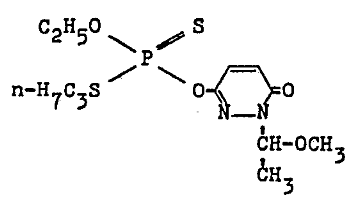

0,1 Mol O-Äthyl-S-n-propyl-0-3-pyridazinon-(5)-yl-dithiophosphorsäureester werden mit 2 Tropfen Thionylchlorid in Toluol vorgelegt. Bei 0 bis 5°C werden dann in einem Guß 0,11 Mol Methylvinyläther zugegeben. Man rührt eine Stunde lang bei 0 bis 5°C und steigert dann die Temperatur bei dauerndem Rühren innerhalb von 4 Stunden langsam auf 50°C.

Nach dem Abkühlen auf Raumtemperatur wird mit Triäthylamin schwach alkalisch gestellt, dreimal mit Wasser extrahiert, die Toluolphase über Natriumsulfat getrocknet und eingeengt.

Das anfallende Produkt wird in Petroläther aufgenommen, Reste des nicht umgesetzten Ausgangsproduktes werden abfiltriert. Nach dem Einengen der Petroläther-Lösung fällt des Endproduct als analysenreines Öl an; Ausbeute: 85% d.Th.

$n_D^{25} = 1{,}5416$

ber.: C 40,9 H 6,0 N 7,9 S 18,2 P 8,8 O 18,2
gef.: C 40,2 H 5,8 N 8,1 S 18,9 P 9,2

Beispiel 2

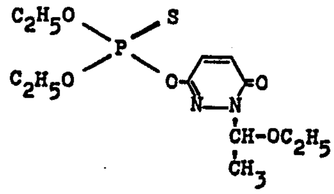

Die Herstellung erfolgt analog Beispiel 1. Als Lösungsmittel wird Acetonitril verwendet; der Vinyläther wird bei Zimmertemperatur zugegeben. Das Endprodukt fällt als analysenreines Öl an. Ausbeute: 79% d.Th.
$n_D^{25} = 1{,}4990$

ber.: C 42,9 H 6,25 N 8,3 S 9,5 P 9,2
ger.: C 42,8 H 6,30 N 8,3 S 9,5 P 9,2

Beispiel 3

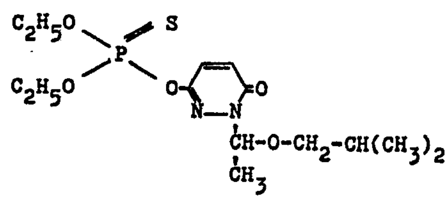

Die Umsetzung wird bei Zimmertemperatur analog Beispiel 1 in Tetrahydrofuran durchgeführt. Als Katalysator wird ein Tropfen $H_3PO_4$ zugesetzt. Das Endprodukt fällt als Öl an. Ausbeute: 82% d.Th.
$n_D^{25} = 1{,}4915$

ber.: C 45,7 H 6,9 N 7,1 S 16,3 P 7,9 O 16,2
gef.: C 44,9 H 6,6 N 7,4 S 16,4 P 8,4

Entsprechend wurden folgende Verbindungen der Formel

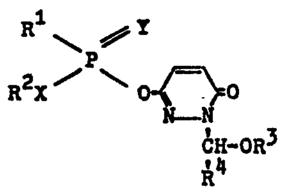

synthetisiert:

| Nr | $R^1$ | $R^2$ | X | Y | $R^3$ | | $R^4$ | $n_D^{25}$ |
|---|---|---|---|---|---|---|---|---|
| 4 | $C_2H_5O$ | $C_2H_5$ | O | S | | 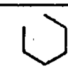 | | 1,5248 |
| 5 | $C_2H_5O$ | $C_2H_5$ | O | S | $CH_3$ | | $CH_3$ | 1,5083 |
| 6 | $C_2H_5O$ | $n-C_3H_7$ | S | S | $i-C_4H_9$ | | $CH_3$ | 1,5261 |
| 7 | $C_2H_5O$ | $n-C_3H_7$ | S | S | | 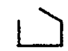 | | 1,5570 |
| 8 | $C_2H_5O$ | $C_2H_5$ | O | S | $C_2H_5$ | | $i-C_3H_7$ | 1,4978 |
| 9 | $C_2H_5O$ | $C_2H_5$ | O | S | | 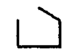 | | 1,5281 |
| 10 | $C_2H_5O$ | $C_2H_5$ | O | S | $CH_3$ | | $n-C_3H_7$ | Fp. = 47—49°C |
| 11 | $C_2H_5O$ | $n-C_3H_7$ | S | S | $i-C_3H_7$ | | $CH_3$ | 1,5249 |
| 12 | $C_2H_5O$ | $n-C_3H_7$ | S | S | $C_2H_5$ | | $CH_3$ | 1,5338 |
| 13 | $C_2H_5O$ | sec.-$C_4H_9$ | S | S | $CH_3$ | | $CH_3$ | 1,5296 |
| 14 | $C_2H_5O$ | sec.-$C_4H_9$ | S | S | $i-C_4H_9$ | | $CH_3$ | 1,5182 |
| 15 | $C_2H_5O$ | sec.-$C_4H_9$ | S | S | | 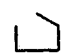 | | 1,5494 |
| 16 | $NH-i-C_3H_7$ | $C_2H_5$ | O | S | $CH_3$ | | $CH_3$ | 1,5140 |
| 17 | $NH-i-C_3H_7$ | $C_2H_5$ | O | S | $i-C_4H_9$ | | $CH_3$ | 1,5045 |
| 18 | $NH-i-C_3H_7$ | $C_2H_5$ | O | S | | 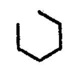 | | 1,5293 |
| 19 | $N(CH_3)_2$ | $C_2H_5$ | O | O | $CH_3$ | | $CH_3$ | |
| 20 | $N(CH_3)_2$ | $C_2H_5$ | O | O | $i-C_4H_9$ | | $CH_3$ | 1,7065 |
| 21 | $N(CH_3)_2$ | $C_2H_5$ | O | O | | 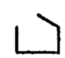 | | |
| 22 | $C_6H_5$ | $C_2H_5$ | O | S | $CH_3$ | | $CH_3$ | 1,5585 |
| 23 | $C_2H_5O$ | $n-C_3H_7$ | S | S | | 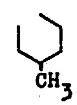 | | 1,5450 |
| 24 | $C_2H_5O$ | $C_2H_5$ | O | S | $i-C_3H_7$ | | $CH_3$ | 1,4973 |

| Nr. | $R^1$ | $R^2$ | X | Y | $R^3$ | $R^4$ | $n_D^{25}$ |
|---|---|---|---|---|---|---|---|
| 25 | $C_2H_5O$ | $C_2H_5$ | O | S | $CH_3$ | $i\text{-}C_3H_7$ | 1,4970 |
| 26 | $C_2H_5O$ | $n\text{-}C_3H_7$ | S | S | 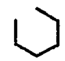 | | 1,5479 |
| 27 | $C_2H_5O$ | $n\text{-}C_3H_7$ | S | S | $CH_3$ | $i\text{-}C_3H_7$ | 1,5260 |
| 28 | $C_2H_5O$ | sec.-$C_2H_9$ | S | S | $C_2H_5$ | $CH_3$ | 1,5263 |
| 29 | $C_2H_5O$ | sec.-$C_4H_9$ | S | S | $C_2H_5$ | $i\text{-}C_3H_7$ | 1,5210 |
| 30 | $C_2H_5O$ | sec.-$C_4H_9$ | S | S | $i\text{-}C_3H_7$ | $CH_3$ | 1,5239 |
| 31 | $C_2H_5O$ | sec.-$C_4H_9$ | S | S | $CH_3$ | $i\text{-}C_3H_7$ | 1,5212 |
| 32 | $C_2H_5$ | sec.-$C_4H_9$ | S | S | 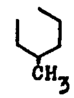 | | 1,5456 |
| 33 | $C_2H_5O$ | sec.-$C_4H_9$ | S | S | 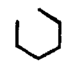 | | 1,5483 |
| 34 | $C_2H_5O$ | sec.-$C_4H_9$ | S | S | $C_2H_5$ | $C_2H_5$ | 1,5207 |
| 35 | $C_2H_5O$ | sec.-$C_4H_9$ | S | S | $C_6H_5$ | $CH_3$ | 1,5620 |
| 36 | $C_2H_5O$ | sec.-$C_4H_9$ | S | S | $CH_3$ | $n\text{-}C_3H_7$ | 1,5261 |
| 37 | NH-$i\text{-}C_3H_7$ | $C_2H_5$ | O | S | $C_2H_5$ | $CH_3$ | 1,5131 |
| 38 | NH-$i\text{-}C_3H_7$ | $C_2H_5$ | O | S | 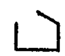 | | 1,5330 |
| 39 | NH-$i\text{-}C_3H_7$ | $C_2H_5$ | O | S | $C_2H_5$ | $i\text{-}C_3H_7$ | 1,5067 |
| 40 | NH-$i\text{-}C_3H_7$ | $C_2H_5$ | O | S | $i\text{-}C_3H_7$ | $CH_3$ | 1,5060 |
| 41 | NH-$i\text{-}C_3H_7$ | $C_2H_5$ | O | S | $C_2H_5$ | $C_2H_5$ | 1,5103 |
| 42 | NH-$i\text{-}C_3H_7$ | $C_2H_5$ | O | S | $C_6H_5$ | $CH_3$ | Fp. = 105—106°C |
| 43 | NH-$i\text{-}C_3H_7$ | $C_2H_5$ | O | S | $CH_3$ | $n\text{-}C_3H_7$ | 1,5123 |
| 44 | $N(CH_3)_2$ | $C_2H_5$ | O | O | $C_2H_5$ | $CH_3$ | 1,4850 |
| 45 | $N(CH_3)_2$ | $C_2H_5$ | O | O | $C_2H_5$ | $i\text{-}C_3H_7$ | 1,4759 |
| 46 | $N(CH_3)_2$ | $C_2H_5$ | O | O | $i\text{-}C_3H_7$ | $CH_3$ | 1,4792 |
| 47 | $N(CH_3)_2$ | $C_2H_5$ | O | O | $C_2H_5$ | $C_2H_5$ | 1,4752 |

Die erfindungsgemäßen Verbindungen sind geeignet, um schädliche oder lästige Gliedertiere aus der Klasse der Insekten und der Arachnoidea (Spinnentiere, Milben, Zecken) wirksam zu bekämpfen.

Schädliche Insekten findet man in der Ordnung der

Lepidoptera (Schmetterlinge)
Coleoptera (Käfer)
Diptera (Zweiflügler)
Hymenoptera (Hautflügler)
Heteroptera (Wanzen)
Homoptera (Pflanzensauger)
Isoptera (Termiten)
Orthoptera (Geradflügler)
Apterygota.

Die einzelnen Vertreter sind aus der entsprechenden Fachliteratur zu ersehen.

Die erfindungsgemäßen Verbindungen können mit Erfolg im Pflanzenschutz sowie auf dem Hygiene-, Vorratsschutz- und Veterinärsektor als Schädlingsbekämpfungsmittel eingesetzt werden.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle, sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, z.B. Methanol, Äthanol, Propanol, Butanol, Chloroform, Tetrachlorkohlenstoff, Cyclohexanol, Cyclohexanon, Chlorbenzol, Isophoron, stark polare Lösungsmittel, z.B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

An oberflächenaktiven Stoffen sind zu nennen;

Alkali-, Erdalkali-, Ammoniumsalze von Ligninsulfonsaure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Lauryläthersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykoläther, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyäthylenoctylphenoläther, äthoxyliertes Isooctylphenol, Octylphenol, Nonylphenon, Alkylphenolpolyglykoläther, Tributylphenylpolyglykoläther, Alkylarylpolyätheralkohol, Isotridecylalkohol, Fettalkoholäthylenoxid-Kondensate, äthoxyliertes Rizinusöl, Polyoxyäthylenalkyläther, äthoxyliertes Polyoxypropylen, Laurylalkoholpolyglykolätheracetal, Sorbitester, Lignin, Sulfitablaugen und Methylcellulose.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten im allgemeinen zwischen 0,1 und 95 Gew.-% Wirkstoff, vorzugsweise zwischen 0,5 und 90 Gew.%.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit über 95 Gew.% Wirkstoff oder sogar den 100%-igen Wirkstoff allein auszubringen.

Beispiele für Formulierungen sind:

I. 500 g Wirkstoff gemäß Beispiel 2
50 g Calciumdodecylbenzolsulfonat
50 g oxäthyliertes Ölsäuremonoäthanolamid
ad 1000 ml Xylol

II. 400 g Wirkstoff Nr. 5
60 g Calciumdodecylbenzolsulfonat
40 g oxäthyliertes Ölsäuremonoäthanolamid
100 g N-Methylpyrrolidon
ad 1000 ml Xylol

III. 3 Gewichtsteile Wirkstoff Nr. 6 werden mit 97 Gewichtsteilen feinteiligem Kaolin innig vermischt. Man erhält auf diese Weise ein Stäubemittel, das 3 Gew.% des Wirkstoffs enthält.

IV. 30 Gewichtsteile Wirkstoff Nr. 10 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

Zu den Wirkstoffen können Öle verschiedenen Typs, Herbizide, Fungizide, andere Insektizide, Bakterizide, gegebenenfalls auch erst unmittelbar vor der Anwending (Tankmix), zugesetzt werden. Diese Mittel können zu den erfindingsgemäßen Wirkstoffen im Gewichtsverhältnis 1 : 10 bis 10 : 1 zugemischt werden.

Die erfindungsgemäßen Verbindungen können somit unter anderem mit den bereits bekannten Insektiziden aus der Gruppe der Phosphorsäureester, der Carbamate, der chlorierten Kohlenwasserstoffe, der Pyrethroide und der Benzoylharnstoffe in beliebigen Verhältnissen gemischt zur Anwendung kommen.

Die folgenden Beispiele belegen die biologische Wirkung. Vergleichsmittel ist O,O-Diäthyl-S-(4-oxo-1,2,3-benzotriazin 3[4H]-yl-methyl)-phosphordithioat (DE—PS 927 270). Die Numerierung der Wirkstoffe entspricht den Herstellungsbeispielen und der tabellarischen Aufählung.

Beispiel A

Kontaktwirkung auf Schaben (Blatta orientalis)

Der Boden eines 1 l-Einmachglases wird mit der acetonischen Lösung des Wirkstoffes behandelt. Nach Verdunsten des Lösungsmittels setzt man je Glas 5 adulte Schaben.

Die Mortalitätsrate wird nach 48 Stunden bestimmt.

| Wirkstoff gemäß Beispiel Nr | Wirkstoffmenge pro Einmachglas [mg] | Mortalitätsrate [%] |
|---|---|---|
| 2 | 0,025 | 100 |
| 4 | 0,05 | 100 |
| 5 | 0,025 | 100 |
| 8 | 0,05 | 100 |
| | 0,02 | 80 |
| 9 | 0,05 | 100 |
| 10 | 0,02 | 100 |
| Vergleichsmittel | 0,1 | 40 |

Beispiel B

Zuchtversuch mit Drosophila melanogaster

40 ml eines Kleie-Agar-Nährbodens werden bei 60°C in Plastik-Flaschen (Volumen: 250 ml) gefüllt und daraus mit 2 ml der wäßrigen Wirkstoffaufbereitung innig vermischt. Nach Erkalten beimpft man den Nährboden mit einer Hefesuspension und gibt eine Filterpapierrolle zu.

Anschließend setzt man 20 bis 40 ungefähr 6 Tage alte Drosophila ein und verschließt die Gefäße.

Die Auswertung erfolgt nach 10 Tagen.

| Wirkstoff gemäß Beispiel Nr. | Wirkstoffkonzentration in der Aufbereitung [ppm] | |
|---|---|---|
| 1 | 1,0 | starke Entwicklungshemmung |
| 4 | 1,0 | starke Hemmung |
| 5 | 1,0 | starke Hemmung |
| | 0,5 | starke Hemmung |
| 6 | 1,0 | totale Hemmung |
| Vergleichsmittel | 2,5 | totale Hemmung |
| | 1,0 | schwache Hemmung |

Beispiel C

Kontaktwirkung auf Stubenfliegen (Musca domestica); Applikationstest

Mit einer AGLA-Mikrometerspritze appliziert man 4 Tage alten Imagines in leichter $CO_2$-Narkose 1 $\mu$l des in Aceton gelösten Wirkstoffes auf das ventrale Abdomen. Je 20 Versuchstiere mit gleicher Behandlung bringt man in einen Cellophanbeutel von ungefähr 500 ml Volumen.

Nach 4 Stunden zählt man die Tiere in Rückenlage aus und ermittelt graphisch die $LD_{50}$.

| Wirkstoff gemäß Beispiel Nr. | $LD_{50}$ ($\mu$g/Fliege) |
|---|---|
| 2 | 0,07 |
| 5 | 0,077 |
| 8 | 0,09 |
| 9 | 0,06 |
| Vergleichsmittel | 0,11 |

Kontaktwirkung auf Baumwollwanzen (Dysdercus intermedius)

Petrischalen von 10 cm Durchmesser werden mit 1 ml der acetonischen Wirkstofflösung ausgekleidet.

Nach Verdunsten des Lösungsmittels besetzt man die Schalen mit je 20 Larven des vorletzten Stadiums und ermittelt die Wirkung nach 24 Stunden.

| Wirkstoff gemäß Beispiel Nr. | Wirkstoffmenge pro Petrischale [%] | Mortalitätsrate [%] |
|---|---|---|
| 1 | 0,05 | 100 |
| 2 | 0,01 | 80 |
| 3 | 0,01 | 80 |
| 4 | 0,01 | 100 |
| 5 | 0,01 | 100 |

Beispiel E

Fraß- und Kontaktwirkung auf Raupen der Kohlschabe (Plutella maculipennis)

Blätter von jungen Kohlpflazen werden 3 Sekunden lang in die wäßrige Wirkstoffemulsion getaucht und nach kurzem Abtropfen auf einen angefeuchteten Filter in eine Petrischale gelegt. Jedes Blatt wird darauf mit 10 Raupen des 4. Stadiums der Kohlschabe belegt.

Nach 48 Stunden beurteilt man die Wirkung.

| Wirkstoff gemäß Beispiel Nr. | Konzentration der Wirkstoffemulsion [Gew.%] | Mortalitätsrate [%] |
|---|---|---|
| 2 | 0,02 | 100 |
| | 0,01 | 80 |
| 3 | 0,02 | 100 |
| | 0,01 | 80 |
| 4 | 0,02 | 100 |
| 5 | 0,01 | 100 |
| | 0,005 | 80 |
| 6 | 0,02 | 100 |
| | 0,01 | 80 |
| 7 | 0,025 | 100 |
| | 0,01 | 80 |
| 8 | 0,02 | 100 |
| | 0,01 | 80 |
| 9 | 0,02 | 100 |
| | 0,01 | 80 |
| 10 | 0,01 | 100 |
| | 0,005 | 80 |

Beispiel F

Kontaktwirkung auf Blattläuse (Aphis fabae); Spritzversuch

Getopfte Bohnenpflanzen (Vicia faba) mit starken Blattlauskolonien werden in der Spritzkammer mit den wäßrigen Wirkstoffaufbereitungen tropfnaß gespritzt.

Die Auswertung erfolgt nach 24 Stunden.

| Wirkstoff gemäß Beispiel Nr. | Konzentration der Wirkstoffaufbereitung [Gew.%] | Mortalitätsrate [%] |
|---|---|---|
| 1 | 0,01 | 100 |
| 2 | 0,005 | 100 |
| 3 | 0,02 | 100 |
| | 0,01 | 80 |
| 4 | 0,01 | 100 |
| 5 | 0,05 | 100 |
| 6 | 0,05 | 100 |

Beispiel G

Kontaktwirkung auf Zecken (Ornithodorus moubata)

Geprüft wird mit Zecken im 3. Larvenstadium. Dazu taucht man die Tiere, die sich in einem Papierbeutel befinden, für 3 Sekunden in die Prüfemulsion. Die Beutel werden frei aufgehängt. Nach 48 Stunden wird die Wirkung auf die Zecken beurteilt.

| Wirkstoff gemäß Beispiel Nr. | Wirkstoffkonzentration der Prüfemulsion [Gew.%] | Mortalitätsrate [%] |
|---|---|---|
| 1 | 0,04 | 100 |
| 2 | 0,04 | 100 |
| 5 | 0,04 | 100 |
| 6 | 0,04 | 100 |

Diese und weitere Vergleichsversuche, ausgeführt mit Verbindungen aus DE—OS 23 43 741, 25 31 340 und 25 34 893, zeigen die höhere Wirksamkeit der erfindungsgemäßen Verbindungen auf, die im Gegensatz zu den bekannten Verbindungen durch eine O-Ethergruppe in 1-Stellung des Pyridazinonringes substituiert sind.

**Patentansprüche**

1. Pyridazinon-yl-(di)(thio)-phosphor(phosphon)-säureester der Formel I

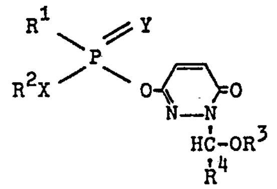

I

in der

X und Y für Sauerstoff oder Schwefel,

$R^1$ für unverzweigtes oder verzweigtes Alkyl mit 1 bis 4 Kohlenstoffatomen, Alkoxy mit 1 bis 4 Kohlenstoffatomen, Mono- oder Dialkylamino mit 1 bis 4 Kohlenstoffatomen je Alkylrest, Phenyl oder Benzyl,

$R^2$ für unverzweigtes oder verzweigtes Alkyl mit 1 bis 4 Kohlenstoffatomen, Phenyl oder Benzyl,

$R^3$ für unverzweigtes oder verzweigtes Alkyl mit 1 bis 4 Kohlenstoffatomen oder Phenyl,

$R^4$ für unverzweigtes oder verzweigtes Alkyl mit 1 bis 4 Kohlenstoffatomen stehen oder

$R^3$ und $R^4$ zusammen mit dem Sauerstoff- und Kohlenstoffatom, deren Substituenten sie sind, einen 5- oder 6-gliedrigen gesättigten Ring bilden, der durch Alkylreste mit 1 bis 4 Kohlenstoffatomen substituiert sein kann.

2. Pyridazinon-yl-(di)(thio)-phosphor(phosphon)-säureester der Formel I, dadurch gekennzeichnet, daß X und Y für Sauerstoff oder Schwefel, $R^1$ für Äthoxy, $R^2$ für Äthyl oder n-Propyl, $R^3$ für unverzweigtes oder verzweigtes Alkyl mit 1 bis 4 Kohlenstoffatomen und $R^4$ für unverzweigtes oder verzweigtes Alkyl mit 1 bis 3 Kohlenstoffatomen stehen oder $R^3$ und $R^4$ zusammen mit dem Sauerstoff- und Kohlenstoffatom, deren Substituenten sie sind, einen Tetrahydrofuran- oder Tetrahydropyranring bilden.

3. Die Verbindung der Formel

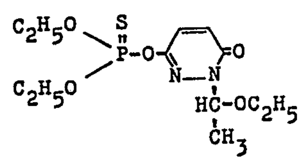

4. Die Verbindung der Formel

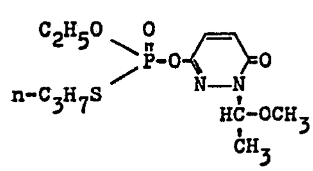

5. Die Verbindung der Formel

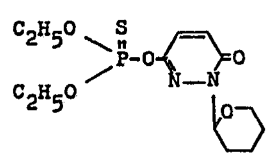

6. Die Verbindung der Formel

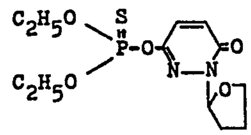

7. Verfahren zur Herstellung von Pyridazinon-yl-(di)(thio)-phosphor(phosphon)-säureestern der Formel I, dadurch gekennzeichnet, daß man Pyridazinon-yl-(di)(thio)-phosphor(phosphon)-säureester der Formel II

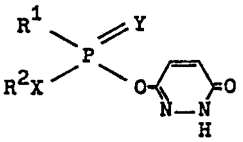 II

in der $R^1$, $R^2$, X und Y die in Anspruch 1 angegebenen Bedeutungen haben,
mit Enoläthern der Formel III

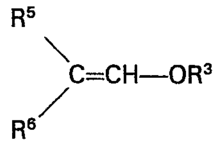 III

in der
- $R^3$ die oben genannten Bedeutungen hat,
- $R^5$ für Wasserstoff oder Methyl,
- $R^6$ für Wasserstoff oder Alkyl mit 1 bis 3 Kohlenstoffatomen und
- $R^3$ und $R^5$ zusammen eine Methylenkette mit 2 oder 3 Kohlenstoffatomen, die durch Alkylreste mit 1 bis 4 Kohlenstoffatomen substituiert sein kann, bedeuten,

in Gegenwart einer katalytischen Menge an Säure und eines inerten Lösungs- oder Verdünnungsmittels bei Temperaturen im Bereich zwischen 0 und 100°C umsetzt.

8. Schädlingsbekämpfungsmittel, enthaltend einen festen und/oder flüssigen Trägerstoff und Pyridazinon-yl-(di)(thio)-phosphor(phosphon)-säureester der Formel I.

9. Verfahren zur Bekämpfung von Schädlingen, dadurch gekennzeichnet, daß man Pyridazinon-yl(di)(thio)-phosphor(phosphon)-säureester der Formel I auf die Schädlinge bzw. deren Lebensraum einwirken läßt.

**Revendications**

1. Esters de pyridazinonyle d'acide (di)(thio)-phosphorique (phosphonique) de la formule générale

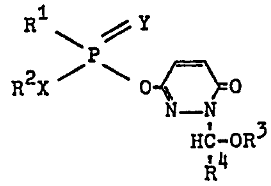 I,

dans laquelle:
- X et Y représentent chacun un atome d'oxygène ou de soufre;
- $R^1$ désigne un radical alcoyle en $C_1$ à $C_4$ à chaîne droite ou ramifiée ou alcoxy en $C_1$ à $C_4$, un groupe mono- ou di-alcoyl-amino à radical (radicaux) alcoyle en $C_1$ à $C_4$, un groupe phényle ou benzyle;
- $R^2$ désigne un radical alcoyle en $C_1$ à $C_4$ à chaîne droite ou ramifiée ou un groupe phényle ou benzyle;
- $R^3$ désigne un radical alcoyle en $C_1$ à $C_4$ à chaîne droite ou ramifiée ou un groupe phényle;
- $R^4$ désigne un radical alcoyle en $C_1$ à $C_4$ à chaîne droite ou ramifiée ou
- $R^3$ et $R^4$ forment avec les atomes d'oxygène et de carbone, dont ils sont les substituants, un noyau penta- ou hexagonal saturé, éventuellement substitué par des radicaux alcoyle en $C_1$ à $C_4$.

2. Esters de pyridazinonyle d'acide (di)(thio)-phosphorique (phosphonique) de la formule I, caractérisés en ce que X et Y désignent chacun un atome d'oxygène ou de soufre, $R^1$ désigne un groupe éthoxy, $R^2$ un radical éthyle ou n-propyle, $R^3$ un radical alcoyle en $C_1$ à $C_4$ à chaîne droite ou ramifiée et $R^4$ un radical alcoyle en $C_1$ à $C_3$ à chaîne droite ou ramifiée ou $R^3$ et $R^4$ constituent avec l'atome d'oxygène et l'atome de carbone, dont ils sont les substituants, un noyau tétrahydrofuranne ou tétrahydropyranne.

3. Le composé de la formule

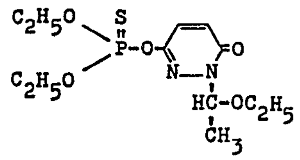

4. Le composé de la formule

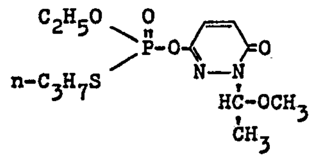

5. Le composé de la formule

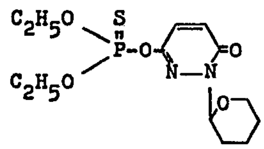

6 Le composé de la formule

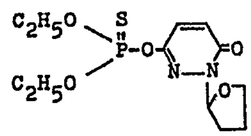

7. Procédé de préparation d'esters de pyridazinonyle d'acide (di)(thio)-phosphorique (phosphonique) de la formule I, caractérisé en ce que l'on fait réagir un ester de pyridazinonyle d'acide (di)(thio)-phosphorique (phosphonique) de la formule

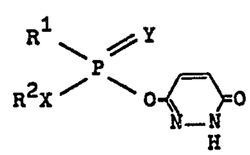

II,

dans laquelle $R^1$, $R^2$, X et Y possèdent les significations définies dans la revendication 1, dans un solvant ou diluant inerte dans les conditions réactionnelles entre 0 et 100°C, en présence d'une quantité catalytique d'une acide, avec un éther énolique de la formule

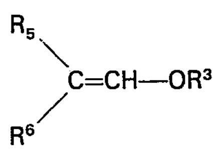

III,

dans laquelle:
- $R^3$ possède l'une des significations définies dans la revendication 1,
- $R^5$ désigne un atome d'hydrogène ou un radical méthyle,
- $R^6$ désigne un atome d'hydrogène ou un radical alcoyle en $C_1$ à $C_3$ et
- $R^3$ et $R^5$ représentent ensemble une chaîne méthylène avec 2 ou 3 atomes de carbone, éventuellement substituée par des radicaux alcoyle en $C_1$ à $C_4$.

8. Composition pesticide, comprenant un véhicule solide et(ou) liquide et au moins un ester de pyridazinonyle d'acide (di)(thio)-phosphorique (phosphonique) de la formule I.

9. Procédé de lutte contre des parasites, caractérisé en ce que l'on applique un ester de pyridazinonyle d'acide (di)(thio)-phosphorique (phosphonique) de la formule I sur les parasites à combattre et(ou) sur leur biotope.

## Claims

1. A pyridazinonyl-(di)(thio)-phosphoric (phosphonic) acid ester of the formula

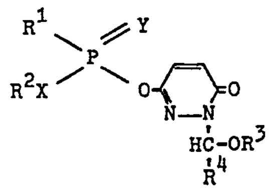

I,

where X and Y each denote oxygen or sulfur, $R^1$ denotes linear or branched alkyl of 1 to 4 carbon atoms, alkoxy of 1 to 4 carbon atoms, mono- or dialkylamino of 1 to 4 carbon atoms in each alkyl, phenyl, or benzyl, $R^2$ denotes linear or branched alkyl of 1 to 4 carbon atoms, phenyl or benzyl, $R^3$ denotes linear or branched alkyl of 1 to 4 carbon atoms or phenyl, $R^4$ denotes linear or branched alkyl of 1 to 4 carbon atoms, or $R^3$ and $R^4$, together with the oxygen and the carbon atom whose substituents they are, form a 5- or 6- membered saturated ring which may be substituted by alkyl of 1 to 4 carbon atoms.

2. A pyridazinonyl-(di)(thio)-phosphoric (phosphonic) acid ester of the formula I, characterized in that X and Y each denote oxygen or sulfur, $R^1$ denotes ethoxy, $R^2$ denotes ethyl or n-propyl, $R^3$ denotes linear or branched alkyl of 1 to 4 carbon atoms, and $R^4$ denotes linear or branched alkyl of 1 to 3 carbon atoms, or $R^3$ and $R^4$, together with the oxygen and the carbon atom whose substituents they are, form a tetrahydrofuran or tetrahydropyran ring.

3. The compound of the formula

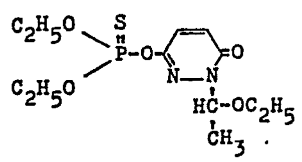

4. The compound of the formula

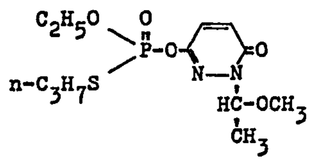

5. The compound of the formula

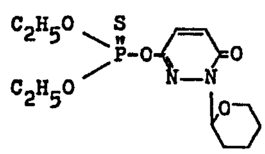

6. The compound of the formula

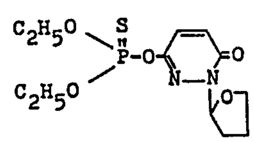

7. A process for the production of pyridazinonyl-(di)(thio)-phosphoric (phosphonic) acid esters of the formula I, characterized in that pyridazinonyl-(di)(thio)-phosphoric (phosphonic) acid esters of the formula II

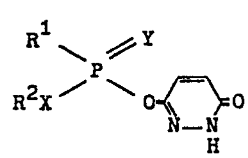

II,

where $R^1$, $R^2$, X and Y have the meanings given in claim 1, are reacted with enol ethers of the formula III

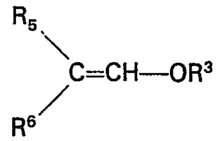

III,

where $R^3$ has the above meanings, $R^5$ denotes hydrogen or methyl, $R^6$ denotes hydrogen or alkyl of 1 to 3 carbon atoms, and $R^3$ and $R^5$ together denote a methylene chain of 2 or 3 carbon atoms which may be substituted by alkyl of 1 to 4 carbon atoms, in the presence of a catalytic amount of acid and an inert solvent or diluent at a temperature of from 0 to 100°C.

8. Pesticides containing a solid and/or liquid carrier and a pyridazinonyl-(di)(thio)-phosphoric (phosphonic) acid ester of the formula I.

9. A process for combating pests, characterized in that a pyridazinonyl-(di)(thio)-phosphoric (phosphonic) acid ester of the formula I is allowed to act on the pests or their habitat.